# EUROPEAN PATENT SPECIFICATION

(11) **EP 2 225 305 B1**
(45) Date of publication and mention of the grant of the patent: **20.11.2013**
(21) Application number: 08861540.6
(22) Date of filing: 16.12.2008
(51) Int. Cl.: C08G 18/76, C08G 18/72, C08G 18/00, C08G 18/32, C08L 75/00, C07C 291/10, C08G 18/10, C08G 18/78, C08G 18/79

(54) **FREEZE-STABLE AROMATIC DIISOCYANATES AND PROCESSES FOR THE PREPARATION OF THESE FREEZE-STABLE PRODUCTS**
GEFRIERSTABILE AROMATISCHE DIISOCYANATE UND VERFAHREN ZUR HERSTELLUNG DIESER GEFRIERSTABILEN PRODUKTE
DIISOCYANATES AROMATIQUES STABLES À LA CONGÉLATION ET PROCESSUS PERMETTANT DE PRÉPARER CES PRODUITS STABLES À LA CONGÉLATION

(30) Priority: 17.12.2007 US 2435
(43) Date of publication of application: 08.09.2010
(73) Proprietor: Bayer MaterialScience LLC, Pittsburgh, PA 15205-9741 (US); Bayone Urethane Systems, St. Louis, MO 63103 (US)
(72) Inventor: NODELMAN, Neil, H., Upper St. Clair PA 15241-2029 (US); HOLESCHOVSKY, Ulrich, B., Exton PA 19341 (US); WALTER, Kurt, E., Pittsburgh PA 15241-2866 (US); YAJKO, Dennis, F., Churchill PA 15235-5046 (US)
(74) Representative: BIP Patents
(86) International application number: PCT/US2008/013767
(87) International publication number: WO 2009/078984

(56) References cited:
- EP-A1- 0 111 121
- JP-A- 6 206 978
- JP-A- 10 036 470
- US-A- 5 723 564
- US-A- 6 028 158
- US-A1- 2003 092 787
- US-A1- 2004 176 492
- US-A1- 2005 027 093
- US-A1- 2007 191 538
- US-A1- 2007 215 267
- US-B1- 6 352 661

## Description

### BACKGROUND OF THE INVENTION

This invention relates to freeze stable aromatic diisocyanates, freeze-stable aromatic diisocyanate prepolymers, and to processes for the preparation of these freeze-stable products.

Diisocyanates that are liquid at room temperature have numerous advantages over solid diisocyanates. The most commercially important diisocyanates are 4,4'-diphenyl-methane diisocyanate, which is a solid at room temperature, 2,4'-diphenylmethane diisocyanate and the toluene diisocyanate isomers. Numerous patents have issued relating to the liquifaction of 4,4'-diphenylmethane diisocyanate (MDI).

One common route to liquifaction of 4,4'-MDI is through carbodiimidizations. Typical of this route are the processes described in, for example, U.S. Patents 3,152,162, 3,384,653, 3,449,256, 3,640,966, 3,641,093, 3,701,796, 4,014,935 4,088,665, 4,154,752 and 4,177,205.

The most common technique to liquify MDI is through the reaction with various hydroxyl functional materials. The prior art has described numerous types of liquid isocyanates. These include both (1) reaction products of (i) MDI or modified MDI with (ii) hydroxyl functional materials such as are described in, for example, U.S. Patents 3,644,457, 3,883,571, 4,229,347, 4,055,548, 4,102,833, 4,115,429, 4,118,411, 4,332,742, 4,448,904, 4,490,300, 4,490,301, 4,490,302, 4,539,156, 4,539,158, 4,883,909, 4,442,235 and 4,910,333, as well as (2) mixtures of (i) a reaction product of MDI or modified MDI and hydroxyl functional materials, with (ii) MDI, PMDI or modified MDI, such as are described in, for example, U.S. Patents 4,031,026, 4,261,852, 4,321,333, 5,240,635 and 5,246,977.

It is also known to introduce allophanate-linkages into polyisocyanates. This is described in various patents including, for example, U.S. Patents 4,738,991, 4,866,103, 5,319,053, 5,319,054, 5,440,003, 5,663,272, 5,610,260 and 5,783,652, and GB Patent 994,890. These products are commonly referred to as allophanate-modified isocyanates.

U.S. Patents 6,242,556 and 6,482,913 describe liquid MDI adducts which exhibit improved freeze stability. U.S. 6,242,556 discloses a blend of (A) an MDI adduct having an NCO group content of 15 to 30% and prepared by reacting MDI of the specified isomer distribution with a low molecular weight branched aliphatic compound that contains two hydroxyl groups; and (B) an allophanate-modified MDI having an NCO group content of 12 to 32.5% and prepared by reacting MDI of the specified isomer distribution with an aliphatic alcohol. The freeze-stable adducts of U.S. 6,482,913 comprise (A) an allophanate-modified MDI having an NCO group content of 16 to 32.5%, (B) a low molecular weight branched aliphatic compound having two hydroxyl groups, and (C) from 0.01 to 1% by weight, based on the combined weight of (A) and (B), of an epoxide functional compound.

Various polyurethane plasticizers are known and described in, for example U.S. Patents 6,218,462, 6,355,721, 6,384,130 and 6,403,702. These patents all disclose that the plasticizers are non-migrating and suitable for the production of conventional polyurethanes.

Advantages of the present invention include low temperature stability (i.e. freeze-stability) of the resultant isocyanates, combined with improved MDI dimer solubility.

### SUMMARY OF THE INVENTION

This invention relates to freeze-stable aromatic diisocyanate compositions and a process for their preparation.

The freeze-stable aromatic diisocyanate compositions have an NCO group content of about 6 to about 29% by weight. These compositions comprise:
(I) from 60 to 95%, preferably from 70 to 90%, by weight, based on 100% by weight of (I) and (II), of an aromatic diisocyanate which is modified to contain allophanate groups, in which the modified diisocyanate has an NCO group content of from 15% to 30% by weight, and/or polyether or polyester polyol prepolymers of an aromatic diisocyanate which is modified to contain allophanate groups, in which the prepolymer has an NCO content of from 10% to 28% by weight;
   and
(II) from 5 to 40%, preferably 10 to 30%, by weight, based on 100% by weight of (I) and (II), of 2,2,4-trimethyl-1,3-pentanediol diisobutyrate.

In a preferred embodiment, the aromatic diisocyanate (I) comprises an allophanate-modified diphenylmethane diisocyanate having an NCO group content of from 18 to 30%, preferably from 23 to 30% by weight, and which comprises the reaction product of:
(a) diphenylmethane diisocyanate that comprises (i) from 0 to 23% by weight of the 2,4'-isomer, (ii) from 0 to 3% by weight of the 2,2'-isomer and (iii) from 74 to 100% by weight of the 4,4'-isomer, with the sum of the %'s by weight of (a)(i), (a)(ii) and (a)(iii) totaling 100% by weight of (a),
   and
(b) an aliphatic alcohol or an aromatic alcohol, wherein the alcohol contains up to 22 carbon atoms.

Another aspect of the present invention is freeze-stable prepolymers of allophanate-modified diphenylmethane diisocyanates. These freeze-stable prepolymers comprise:
(I) from 60 to 95% by weight, preferably from 70 to 90% by weight, based on 100% by weight of (I) and (II), of a prepolymer of an allophanate-modified diphenylmethane diisocyanate having an NCO group content of 10 to 28% and which is the reaction product of:
   (A) an allophanate-modified diphenylmethane diisocyanate having an NCO group content of from 18 to 30%, preferably from 23 to 30% by weight, and which comprises the reaction product of:
      (a) diphenylmethane diisocyanate that comprises from 0 to 23% by weight of the 2,4-isomer, from 0 to 3% by weight of the 2,2'-isomer and from 74 to 100% by weight of the 4,4'-isomer, with the sum of the %'s by weight of the 2,4'-, the 2,2'-and the 4,4'-isomers totaling 100% by weight of (a),
         and
      (b) an aliphatic alcohol or an aromatic alcohol, wherein the alcohol contains up to 22 carbon atoms;
      with
   (B) a polyether polyol containing from 1 to 6 hydroxyl groups and having a molecular weight of from 1,000 to 12,000, in which the polyether polyol is prepared from a suitable starter compound with ethylene oxide and propylene oxide in a weight ratio of 0:100 to 35:65;
   and
(II) from 5 to 40% by weight, preferably from 10 to 30% by weight, based on 100% by weight of (I) and (II), of 2,2,4-trimethyl-1,3-pentanediol diisobutyrate.

The invention also relates to a process of preparing these freeze-stable isocyanate compositions. This process comprises:
(1) blending
   (I) from 60% to 95%, preferably 70 to 90 by weight, based on 100% by weight of (I) and (II), of an aromatic diisocyanate as described above and having an NCO group content of 10% to 30% by weight;
      with
   (II) from 5 to 40%, preferably 10 to 30% by weight, based on 100% by weight of (I) and (II), of 2,2,4-trimethyl-1,3-pentanediol diisobutyrate.

The process of preparing the freeze-stable, allophanate-modified diphenylmethane diisocyanate compositions comprises:
(1) blending
   (I) from 60% to 95% by weight, preferably 70 to 90 by weight, based on 100% by weight of (I) and (II), of an allophanate-modified diphenylmethane diisocyanate as described above and having an NCO group content of 18% to 30%;
      with
   (II) from 5 to 40% by weight, preferably 10 to 30% by weight, based on 100% by weight of (I) and (II), of 2,2,4-trimethyl-1,3-pentanediol diisobutyrate.

The process of preparing the freeze-stable prepolymers of the allophanate-modified diphenylmethane diisocyanate compositions comprises:
(1) blending
   (I) from 60 to 95% by weight, preferably 70 to 90 by weight, based on 100% by weight of (I) and (II), of a prepolymer of an allophanate-modified diphenylmethane diisocyanate as described above and having an NCO group content of 10% to 26.5%;
      with
   (II) from 5 to 40% by weight, preferably 10 to 30% by weight, based on 100% by weight of (I) and (II), of 2,2,4-trimethyl-1,3-pentanediol diisobutyrate.

### DETAILED DESCRIPTION OF THE INVENTION

As used herein with respect to the polyisocyanate compositions of the invention, the term freeze-stable means that the polyisocyanate compositions herein do not become cloudy and/or precipitate solids at temperatures up to 10°C below the freezing temperature of the neat (unblended) isocyanate, for a period of at least 28 days, preferably at least two (2) months, more preferably at least three (3) months, and most preferably at least six (6) months.

In addition, once the polyisocyanate compositions have been frozen, the compositions can be heated to form clear polyisocyanate compositions again. By comparison, conventional materials are not clear upon being reheated. This is apparently due to dimer formation of the 4,4'-MDI in the conventional isocyanate compositions, which is accelerated when 4,4'-MDI is in the solid phase. In the isocyanate compositions of the present invention, the TXIB in the blend appears to improve the solubility of the MDI dimer, therefore improving the clarity of the unfrozen product.

As used herein, all molecular weights are number average molecular weights.

The freeze-stable aromatic diisocyanate having an NCO group content of 6 to 28.5% by weight comprises:
(I) from 60 to 95% by weight, based on 100% by weight of (I) and (II), of an aromatic diisocyanate having an NCO group content of 10% to 30%, and preferably 12% to 30% by weight and which contains one or more allophanate modifying group as described herein;
   and
(II) from 5 to 40% by weight, based on 100% by weight of (I) and (II), of 2,2,4-trimethyl-1,3-pentanediol diisobutyrate.

These freeze-stable, allophanate-modified isocyanates of the present invention comprise:
(I) from 60 to 95% by weight, based on 100% by weight of (II) and (II), of an allophanate-modified diphenylmethane diisocyanate having an NCO group content of 18% to 30% and preferably 23% to 30% by weight;
   and
(II) from 5 to 40% by weight, based on 100% by weight of (I) and (II), of 2,2,4-trimethyl-1,3-pentanediol diisobutyrate.

These freeze-stable prepolymers of allophanate-modified isocyanates of the present invention comprise:
(I) from 60 to 95% by weight, based on 100% by weight of (I) and (II), of a prepolymer of an allophanate-modified diphenylmethane diisocyanate having an NCO group content of 10% to 28%, and preferably 12% to 25% by weight;
   and
(II) from 5 to 40% by weight, based on 100% by weight of (I) and (II), of 2,2,4-trimethyl-1,3-pentanediol diisobutyrate.

In accordance with the present invention, the aromatic diisocyanate which contains one or more modifying group as described herein is present in an amount of at least 60% by weight and preferably at least 70% by weight, based on 100% by weight of (I) and (II), i.e. the blend. The aromatic diisocyanate is also typically present in an amount of no more than 95% by weight and preferably no more than 90% by weight, based on 100% by weight of (I) and (II), i.e. the blend. The quantity of the aromatic diisocyanate may vary between any combination of these upper and lower values, inclusive, e.g. from 60 to 95% and preferably from 70 to 90% by weight, based on 100% by weight of (I) and (II), i.e. the blend.

These modified diisocyanates have an NCO group content of from 15% to 30% by weight. Also suitable are prepolymers of such modified diisocyanates as described above. These prepolymers of the modified diisocyanates have NCO group contents of 10% to 28% by weight.

The amount of 2,2,4-trimethyl-1,3-pentanediol diisobutyrate present in accordance with the invention is at least 5%, and preferably 10% by weight, based on 100% by weight of the blend. The 2,2,4-trimethyl-1,3-pentanediol diisobutyrate is also typically present in an amount of no more than 40% by weight and preferably no more than 30% by weight, based on 100% by weight of the blend. Overall, the freeze-stable liquids of the invention may contain 2,2,4-trimethyl-1,3-pentanediol diisobutyrate in an amount ranging between any combination of these upper and lower values, inclusive, e.g. from 5% to 40% and preferably from 10% to 30% by weight, based on 100% by weight of the blend.

A starting (or unmodified) aromatic diisocyanate for the present invention is diphenylmethane diisocyanate. In accordance with the present invention, a particularly preferred diphenylmethane diisocyanate contains (i) from 0% to 23%, preferably from 0% to 10% by weight of the 2,4'-isomer of MDI; (ii) from 0% to 3%, preferably from 0% to 3% by weight of the 2,2'-isomer of MDI; and (iii) from 74% to 10%, preferably from 87% to 100% by weight of the 4,4'-isomer of MDI; with the sum of (i), (ii) and (iii) totaling 100% by weight of diphenylmethane diisocyanate.

As described herein the starting or unmodified aromatic diisocyanate component of the present invention is modified such that it contains one or more modifying allophanate groups, or a prepolymer of such a modified aromatic diisocyanate (i.e. prepolymers thereof).

A prepolymer is the prepolymer of allophanate-modified diphenylmethane diisocyanate. Suitable prepolymers of allophanate-modified diphenylmethane diisocyanate to be used herein comprise the reaction product of an allophanate-modified diphenylmethane diisocyanate, with a polyether polyol or a polyester polyol. These are described in detail below.

In accordance with the present invention, suitable compositions to be used herein include allophanate-modified MDI having an NCO group content of from 18% to 30%. The allophanate-modified MDI typically has an NCO group content of at least 18% by weight, preferably at least 23% by weight. The allophanate-modified MDI also typically has an NCO group content of no more than 30% by weight. Suitable allophanate-modified MDI of the present invention may have an NCO group content ranging between any combination of these upper and lower values, inclusive, e.g. from 18% to 30% by weight, preferably from 23% to 30% by weight.

Suitable allophanate-modified MDIs for the present invention comprise the reaction product of:
(a) diphenylmethane diisocyanate containing (i) from 0% to 23% by weight of the 2,4'-isomer, (ii) from 0% to 3% by weight of the 2,2'-isomer and (iii) from 74% to 100% by weight of the 4,4'-isomer, with the sum of the %'s by weight of the (i), (ii) and (iii) totaling 100% by weight of (a);
   and
(b) an aliphatic alcohol or an aromatic alcohol in which the alcohols contains up to 22 carbon atoms, and
preferably monofunctional alcohols.

The diphenylmethane diisocyanate suitable for component (a) as described above for the present invention has the isomer distribution as set forth above, wherein the sum of the %'s by weight of 2,2'-isomer, 2,4'-isomer and 4,4'-isomer must total 100% by weight of the diphenylmethane diisocyanate (a). It is preferred that the diphenylmethane diisocyanate contains from 0% to 10% by weight of the 2,4'-isomer, from 0% to 3% by weight of the 2,2'-isomer, and from 87% to 100% by weight of the 4,4'-isomer. In all instances, the sum of the %'s by weight of the 2,4'- isomer, the 2,2'-isomer and the 4,4'-isomer will total 100% by weight of (a), the diphenylmethane diisocyanate.

Suitable aliphatic alcohols to be used as component (b) can contain 1 to 22 and preferably 1 to 8 carbon atoms. Illustrative but non-limiting examples of the aliphatic alcohols can be selected from the group consisting of straight and branched chain aliphatic alcohols, cycloaliphatic alcohols, aliphatic alcohols containing aromatic groups, aliphatic alcohols containing groups that do not react with isocyanates, e.g. ether groups and halogens such as bromine and chlorine. Specific but non-limiting examples of the suitable aliphatic alcohols include methanol, ethanol, isomeric propanols, isomeric butanols, isomeric pentanols, isomeric hexanols, isomeric heptanols, isomeric octanols, (e.g., 2-methyl 1-ethanol, 2-methyl-1-propanol, 2-methyl-1-butanol, 2-methyl-1-pentanol, 2-methyl-1-hexanol, etc.), cetylalcohol, cyclohexanol, 2-methoxyethanol, 2-methoxypropanol, 3-methoxybutanol, 2-bromoethanol, 2-bromopropanol, 2-bromobutanol, benzyl alcohol, 2-ethyl-1-hexanol, 2-butoxy ethanol etc. Aliphatic alcohols for the present invention which are most preferred include the branched aliphatic alcohols such as, for example, 2-methyl-1-propanol (isobutanol). Prefered aliphatic alcohols to be used herein include, for example, 1-butanol, isobutanol, 1-propanol, 1-pentanol and 2-ethyl -1-hexanol.

Also suitable to be used as component (b) are aromatic alcohols which contain up to 22 carbon atoms. More specifically, these aromatic alcohols preferably contain from 6 to 18 carbon atoms, more preferably from 6 to 15. As used herein, the term aromatic alcohols refers those alcohols which have the alcoholic hydroxyl group attached to the aromatic group. Specific examples of the aromatic alcohols can be phenol, 1-naphthol, 2-naphthol, m-cresol, nonylphenol, isononylphenol, o-chlorophenol, p-bromophenol, m-nitrophenol and o-fluorophenol. Preferred aromatic alcohols include phenol, isononylphenol and m-cresol.

Suitable allophanate-modified diphenylmethane diisocyanates of the present invention can be prepared by, for example, the process disclosed in U.S. Patent 5,319,053.

Suitable compositions also include prepolymers of allophanate-modified diphenylmethane diisocyanates. These prepolymers typically have an NCO group content of from 10% to 28%. The prepolymer of the allophanate-modified MDI typically has an NCO group content of at least 10% by weight, preferably at least 12% by weight, and more preferably at least 15% by weight. The prepolymer of the allophanate-modified MDI also typically has an NCO group content of no more than 28% by weight, preferably of no more than 25% by weight and more preferably of no more than 23% by weight. Suitable prepolymers of allophanate-modified MDI of the present invention may have an NCO group content ranging between any combination of these upper and lower values, inclusive, e.g. from 10% to 28% by weight, preferably from 12% to 25% by weight, and more preferably from 15% to 23% by weight.

As described above, prepolymers of allophanate-modified diphenylmethane diisocyanate are prepared by reacting the above described allophanate-modified diphenylmethane diisocyanates with at least one isocyanate-reactive component having a functionality of 1 to 6 and a molecular weight of 1,000 to 12,000. These isocyanate-reactive components include, for example, polyether polyols and polyester polyols.

These isocyanate-reactive components typically have a functionality of at least 1, preferably at least 1.5 and more preferably at least 1.7. These isocyanate-reactive components also typically have a functionality of no more than 6. The suitable isocyanate-reactive components may have a functionality ranging between any combination of these upper and lower values, inclusive, e.g. from 1 to 6, preferably from 1.5 to 6 and most preferably from 1.7 to 6.

These isocyanate-reactive components typically have a molecular weight of at least 1000, preferably at least 2000 and more preferably at least 3000. These isocyanate-reactive components also typically have a molecular weight of no more than 12,000. The suitable isocyanate-reactive components may have a molecular weight ranging between any combination of these upper and lower values, inclusive, e.g. from 1,000 to 12,000, preferably from 2,000 to 12,000 and more preferably from 3,000 to 12,000.

Suitable polyether polyols to be used herein for the prepolymers of the allophanate-modified MDI of the present invention include, for example, those which contain from 1 to 6 hydroxyl groups and have a (number average) molecular weight of from 1,000 to 12,000. These polyether polyols are prepared from a suitable starter compound with ethylene oxide and/or propylene oxide in a weight ratio of from 0:100 to 35:65, in the presence of a suitable catalyst. Suitable catalysts include, for example, basic catalysts such as potassium hydroxide, and DMC (double metal cyanide catalysts). These polyether polyols may either be conventional polyether polyols or low unsaturation polyether polyols.

The polyether polyols to be used herein typically have a functionality of at least 1, preferably at least 1.5 and more preferably at least 1.7. These polyether polyols also typically have a functionality of less than or equal to 6. The polyether polyols useful herein may have a functionality ranging between any combination of these upper and lower values, inclusive, e.g. from 1 to 6, preferably from 1.5 to 6.0, and more preferably from 1.7 to 6.0.

The polyether polyols suitable herein typically have a molecular weight of at least 1,000, preferably at least 2,000. These polyether polyols also typically have a molecular weight of less than or equal to 12,000 The polyether polyols useful herein may have a molecular weight ranging between any combination of these upper and lower values, inclusive, e.g. from 1,000 to 12,000, preferably from 2,000 to 12,000.

In addition, these polyether polyols are prepared by alkoxylating a suitable starter compound with ethylene oxide and propylene oxide in a weight ratio of from 0:100 to 35:65. In the preparation of these polyether polyols, ethylene oxide and propylene oxide are preferably used in a weight ratio of from 10 (EO):90 (PO) to 30 (EO):70 (PO), more preferably of from 12 (EO):88 (PO) to 20 (EO):80 (PO), and most preferably of from 15 (EO):85 (PO) to 20 (EO):80 (PO).

Suitable starter compounds for preparation of the polyether polyols include compounds such as, for example, ethylene glycol, 1,2- and 1,3-propylene glycol, 1,3-, 1,4- and 2,3-butylene glycol, glycerol, trimethylolethane, trimethyolpropane, neopentyl glycol, pentaerythritol, mannitol, sorbitol, diethylene glycol, dipropylene glycol, dibutylene glycol, cyclohexanedimethanol, 2-methyl-1,3-propanediol, 2-methyl-2,4-pentanediol, 2,2,4-trimethyl-1,3-pentanediol, 3-methyl-5-ethyl-2,4- heptanediol, triethylene glycol, tripropylene glycol, tributylene glycol, tetraethylene glycol, water, methanol, ethanol, 1,2,6-hexanetriol, 1,2,4-butanetriol, phenol, isononylphenol, resorcinol, hydroquinone, 1,1,1- and 1,1,2-tris-(hydroxylphenyl)ethane, etc., and mixtures thereof. Preferred starter compounds for the polyether polyols include propylene glycol, glycerol, water, ethylene glycol, diethylene glycol, trimethylolpropane, pentaerythritol and sorbitol.

Suitable polyester polyols to be used in preparing prepolymers of the allophanate-modified MDI of the present invention include, for example, those which contain from 1.5 to 3.0 hydroxyl groups and have a (number average) molecular weight of from 500 to 3000. These polyester polyols are typically prepared by reacting of one or more di- or poly-hydric alcohols with one or more di- or poly-carboxylic acids or derivatives thereof. The polyesters may be catalyzed or uncatalyzed.

The polyester polyols to be used herein typically have a functionality of at least 1.5, preferably at least 2.0. These polyester polyols also typically have a functionality of less than or equal to 3.0, preferably less than or equal to 2.5. The polyester polyols useful herein may have a functionality ranging between any combination of these upper and lower values, inclusive, e.g. from 1.5 to 3.0, preferably from 2.0 to 2.5.

The polyester polyols suitable herein typically have a molecular weight of at least 500, preferably at least 1,000. These polyester polyols also typically have a molecular weight of less than or equal to 3000, preferably less than or equal to 2,800 and more preferably less than or equal to 2,500. The polyester polyols useful herein may have a molecular weight ranging between any combination of these upper and lower values, inclusive, e.g. from 500 to 3,000, preferably from 1,000 to 2,800, and more preferably from 1,000 to 2,500.

Preferred polyester polyols include those which are prepared by the reaction of one or more di- or poly-hydric alcohols with one or more di- or poly-carboxylic acids or derivatives thereof. Suitable polyhydric alcohols include for example, in particular diols, include: ethanediol (ethylene glycol), diethylene glycol, 1,2- and 1,3-propanediol, dipropylene glycol, 1,4-butanediol, 1,3-butanediol, 2-methyl-1,3-propanediol, 1,4-cyclohexanedimethanol (CHDM), neopentyl glycol, 2,2,4-trimethyl-1,3-pentanediol (TMPD), 1,5-pentanediol, 1,6-hexanediol, 1,10-decanediol, glycerol and trimethylolpropane. Preference is given to ethanediol, propylene glycol, dipropylene glycol, neopentyl glycol, diethylene glycol, 1,4-butanediol, 1,5-pentanediol, 1,6-hexanediol or mixtures of at least two of the diols mentioned, in particular mixtures of 1,4-butanediol and ethanediol. Examples of suitable di- and poly-carboxylic acids include adipic acid, succinic acid, glutaric acid, suberic acid, azelaic acid, sebacic acid, decanedicarboxylic acid, maleic acid, fumaric acid, dimeric and/or trimeric fatty acids, and preferably adipic acid, phthalic acid, isophthalic acid, terephthalic acid, and the isomeric naphthalenedicarboxylic acids. The di- and poly-carboxylic acids may be used either individually or as a mixture with one another. Instead of the free dicarboxylic acids, the corresponding dicarboxylic acid derivatives, for example dicarboxylic esters of alcohols having from 1 to 4 carbon atoms or dicarboxylic anhydrides like phthalic anhydride, hexahydrophthalic anhydride, trimellitic anhydride may also be used. Preference is given to adipic acid and using dicarboxylic acid mixtures of succinic, glutaric and adipic acid, and in particular mixtures of phthalic acid and/or phthalic anhydride and adipic acid, mixtures of phthalic acid/anhydride, isophthalic acid and adipic acid, and mixtures of terephthalic acid and adipic acid.

In accordance with the present invention, the prepolymers of the allophanate-modified diphenylmethane diisocyanate as described above are blended with 2,2,4-trimethyl-1,3-pentanediol diisobutyrate to form a freeze-stable isocyanate composition.

A process for preparing the freeze stable allophanate-modified polyisocyanate compositions of the present invention includes the following steps:

Diphenylmethane diisocyanate is charged to a reactor and heated to about 60°C under agitation. A calculated amount of the chosen alcohol is added, followed by the catalytic amounts of zinc acetylacetonate or other suitable catalyst. The reaction mixture is stirred at 90°C until the calculated NCO content is reached (i.e., 18 to 30% NCO). At this time, a small amount of benzoyl chloride (or other suitable stopper) is added to deactivate the catalyst. The allophanate-modified MDI is subsequently cooled to 60°C. If a prepolymer is to be made, after cooling of the allophanate-modified MDI, a calculated amount of a polyether polyol is added and reacted with the allophanate-modified MDI until the calculated isocyanate content of the prepolymer is reached (i.e., 10 to 28% NCO). During cooling to 25°C, the desired amount of 2,2,4-trimethyl-1,3-pentanediol diisobutyrate compound is added (i.e., from 5 to 40% by weight, based on 100% by weight of components (A) and (B)). The final isocyanate content and the viscosity are determined and the product is stored until used in the preparation of a polyurethane.

The blends of the allophanate-modified diphenylmethane diisocyanate, with 2,2,4-trimethyl-1,3-pentanediol diisobutyrate (TXIB) typically have NCO group contents of at least 11% and preferably of at least 14% NCO. These blends also typically have NCO group contents of no more than 28.5% and preferably no more than 28% NCO. The blends of allophanate-modified MDI with TXIB may have an NCO group content ranging between any combination of these upper and lower values, inclusive, e.g. from 11% to 28.5% NCO, and preferably from 14% to 28% NCO. In addition, the viscosity of the original allophanate-modified MDI product may be reduced by more than half in the final blend.

The blends of the prepolymers of the allophanate-modified diphenylmethane diisocyanate with 2,2,4-trimethyl-1,3-pentanediol diisobutyrate (TXIB) typically have NCO group contents of at least 6% NCO and preferably at least 8% NCO. These blends also typically have NCO group contents of no more than 26.5%, and preferably no more than 23% NCO. In addition, these blends of prepolymers of allophanate-modified MDI with TXIB may have an NCO group content ranging between any combination of these upper and lower values, inclusive, e.g. from 6% to 26.5% and preferably from 8% to 23% NCO. In addition, the viscosity of the original allophanate-modified MDI product may be reduced by more than half in the final blend.

The examples illustrate that another advantage of using TXIB in aromatic diisocyanates which contain at least one modifying group as described herein is that if such blends become turbid or even solidify due to exposure to cold temperatures for extended periods of time, the blends can be returned to a perfectly clear state by reheating. This is believed to be due to the increased solubility of MDI dimer, whose formation is accelerated when 4,4'-MDI is in the solid state, in TXIB.

All molecular weights disclosed herein are number average molecular weights unless otherwise stated.

The following examples further illustrate details for the preparation and use of the compounds of this invention. The invention, which is set forth in the foregoing disclosure, is not to be limited by these examples. Those skilled in the art will readily understand that known variations of the conditions and processes of the following preparative procedures can be used to prepare these compounds. Unless otherwise noted, all temperatures are degrees Celsius and all parts and percentages are parts by weight and percentages by weight, respectively.

### EXAMPLES

The following materials were used in the working examples:
- Isocyanate A:: diphenylmethane diisocyanate comprising less than 2% by weight of the 2,4'-isomer, more than 98% by weight of the 4,4'-isomer and less than 0.5% by weight of the 2,2'-isomer and having an NCO group content of about 33.5%
- Alcohol A:: isobutyl alcohol
- Polyol A:: a propylene glycol started polypropylene oxide polyether polyol having a 20% ethylene oxide cap, a molecular weight of about 4000 and an OH number of about 28
- Polyester A:: a polyester polyol prepared from adipic acid, 1,4-butanediol and ethylene glycol having a molecular weight of 2000 and a functionality of 2.0
- TPG:: tripropylene glycol
- TXIB:: 2,2,4-trimethyl-1,3-pentanediol diisobutyrate

The modified aromatic diisocyanates of the invention were prepared as described below.

### Preparation of A Liquid Allophanate-Modified Isocyanate (Allophanate 1):

53.24 parts by weight of Isocyanate A were added to a reactor at 45°C, followed by the addition of 0.0056 parts by weight of zinc acetylacetonate catalyst at 45°C. Then, 1.6 parts by weight of Alcohol A were added to the reactor at 45°C, and the mixture reacted at 90°C for 90 minutes. At this time, 0.0088 parts by weight of benzoyl chloride (a catalyst stopper) were added at 50°C. The NCO group content of the allophanate-modified diphenylmethane diisocyanate was about 29% by weight. The allophanate-modified diphenylmethane diisocyanate is referred throughout the examples as Allophanate 1.

### Preparation of a Prepolymer (Prepolymer 1) of the Liquid Allophanate-Modified Diphenylmethane Diisocyanate (i.e Allophanate 1 above):

To the reactor containing 54.84 parts of allophanate-modified diphenylmethane diisocyanate having an NCO group content of about 29% by weight, was added 25.16 parts by weight of Polyol A at 50°C and the mixture was reacted at 60°C for 2 hrs. This resulted in a prepolymer of an allophanate-modified diphenylmethane diisocyanate in which the NCO group content of the prepolymer is 19% by weight. This prepolymer is referred to throughout the examples as Prepolymer 1.

### Freeze-Stable Liquid Isocyanate Compositions in Accordance With the Present Invention Were Made by Following Procedure:

For each freeze-stable isocyanate composition, the required quantity of the above described isocyanate compositions (Allophanate 1, Prepolymer 1) were cooled to 25°C. To the cooled isocyanate compositions, were added 20 parts by weight ofTXIB. The resulting liquid isocyanate compositions were freeze-stable isocyanates in accordance with the present invention. Characteristic properties of each freeze-stable isocyanate such as NCO group contents, viscosity, etc. are set forth in Table 1.

**Table 1:**

| Isocyanates | Iso 1* | Freeze-Stable Iso 1 | Iso 2* | Freeze-Stable Iso 2 |
|---|---|---|---|---|
| Allophanate 1 (pbw) | 100 | 80 | | |
| Prepolymer 1 (pbw) | | | 100 | 80 |
| TXIB (pbw) | | 20 | | 20 |
| | | | | |
| % NCO by wt. | 29 | 23.2 | 19 | 15.2 |
| Viscosity at 25°C (mPa.s) | 40 | Not measured | 475 | 174 |

| | | | | |
|---|---|---|---|---|
| *Isos 1, 2 represent isocyanate compositions with no TXIB. These are comparative examples. | | | | |

Each of the isocyanate compositions in Table 1 was then subjected to temperatures ranging from -5 °C to 30°C for various time periods to determine the effect (if any) of this exposure on the clarity of each isocyanate composition. Cloudiness, the presence of any precipitated solids, and freezing of the composition was also noted, and the time required at each temperature for this to occur.

**Table 2:**

| Example | Iso 1* | Freeze-Stable Iso 1 | Iso 2* | Freeze-Stable Iso 2 |
|---|---|---|---|---|
| 35°C | remains clear after 28 days | remains clear after 28 days | clear > 6 months | clear > 6 months |
| 25°C | cloudy in 24 hours | remains clear after 28 days | clear for > 6 months | clear for > 6 months |
| 20°C | cloudy in 24 hours | cloudy in 24 hours | cloudy w/ ppt. solids after 30 days | clear for > 6 months |
| 15°C | ND | ND | cloudy w/ ppt. solids after 30 days | clear for > 6 months |
| 10°C | ND | ND | cloudy with ppt. solids at 20 hours; frozen at 64 hours⁽¹⁾ | slightly cloudy on day 6; increased cloudiness on day 10 |
| -5 °C | ND | ND | ND | frozen on day 3⁽²⁾ |

| | | | | |
|---|---|---|---|---|
| * Isos 1 and 2 are comparative isocyanate compositions that did not contain any | | | | |

### TXIB.

(1) Iso 2 (a prepolymer of an allophanate-modified diphenylmethane diisocyanate) did not become clear when unfrozen. This is believed to be caused by MDI dimer formation which easily forms in the solid state. Dimers of MDI are not soluble in the unfrozen isocyanate
(2) Freeze-stable Iso 2 returned to a perfectly clear state after being frozen when heated overnight at 60°C (i.e. 140°F). This isocyanate composition remained clear when cooled down to room temperature (i.e. about 25°C).

The above data shows that TXIB solubilizes the dimer formed when the 4,4'-MDI was in the solid state in Freeze-Stable Iso 2. The neat prepolymer (i.e. Iso 2) contained suspended solids upon re-melting which could result in plugged filters when used with molding equipment to make polyurethane parts.

Isocyanate 5 (not according to the invention) is a prepolymer of an isocyanate. The preparation of Isocyanate 5 was as follows:
Isocyanate 5: Isocyanate 5 was prepared by adding 86.2 parts by weight of Isocyanate A to a reactor at 40°C, followed by adding 13.8 parts by weight of TPG. The reactants were heated to 65°C and allowed to react until a % NCO group content of 23.0% by weight was attained. The product was cooled. The resultant prepolymer had a functionality of 2.0, a % NCO group content of 22.9% by weight and a viscosity of 675 mPa.s at 25°C.

### Freeze-Stable Liquid Isocyanate Composition in Accordance With the Present Invention Were Made by Following Procedure:

For the freeze-stable isocyanate composition set forth in Table 4, the required quantity of the above described isocyanate composition (Isocyanate 5) was cooled to 25°C. To the cooled isocyanate composition, were added 20 parts by weight of TXIB. The resulting liquid isocyanate composition was freeze-stable isocyanate in accordance with the present invention. Characteristic properties of the freeze-stable isocyanate such as NCO group contents, viscosity, etc. are set forth in Table 4.

**Table 4:**

| Isocyanates | | | Iso 5* | Freeze-Stable Iso 5 |
|---|---|---|---|---|
| | | | | |
| Isocyanate 5 (pbw) | | | 100 | 80 |
| TXIB (pbw) | | | 0 | 20 |
| | | | | |
| % NCO by wt. | | | 23% | 18.3% |
| Viscosity at 25 °C (mPa.s) | | | 675 | ND |

| | | | | |
|---|---|---|---|---|
| ND: not determined | | | | |

Each of the isocyanate compositions in Table 4 was then subjected to temperatures of -5 °C for various time periods to determine the effect (if any) of this exposure on the clarity of each isocyanate composition. Cloudiness, the presence of any precipitated solids, and freezing of the composition was also noted, and the time required for this to occur. The results are set forth in Table 5.

**Table 5:**

| Isocyanates | | | Iso 5* | Freeze-Stable Iso 5 |
|---|---|---|---|---|
| 2 Hours | | | frozen | clear |
| 8 Hours | | | | slightly cloudy |
| 10 Hours | | | | very turbid |
| 12 Hours | | | | frozen |

The frozen samples of Iso 5 (comparative example) were later heated at 60 °C (i.e. 140°F) overnight. Upon cooling down to room temperature (i.e. about 25°C), the Iso became cloudy.

The frozen samples of Freeze-Stable Iso 5 were later heated at 60 °C (i.e. 140°F) overnight. The Iso became perfectly clear and remained clear when cooled down to room temperature (i.e. about 25°C).

## Claims

1. A freeze-stable aromatic diisocyanate composition which comprises:
(I) from 60% to 95% by weight, based on 100% by weight of (I) and (II), of an aromatic diisocyanate which comprises an allophanate modified diphenylmethane diisocyanate having an NCO group content of from 18% to 30% by weight, which comprises the reaction product of:
(a) diphenylmethane diisocyanate comprising (i) from 0% to 23% by weight of the 2,4'-isomer, (ii) from 0% to 3% by weight of the 2,2'-isomer and (iii) from 74% to 100% by weight of the 4,4'-isomer, with the sum of the %'s by weight of (a)(i), (a)(ii) and (a)(iii) totaling 100% by weight of said diphenylmethane diisocyanate,
and
(b) an aliphatic alcohol or an aromatic alcohol, wherein the alcohol contains up to 22 carbon atoms
or a prepolymer of an allophanate-modified diphenylmethane diisocyanate having an NCO group content of from 10% to 28% by weight and which comprises the reaction product of:
(A) an allophanate-modified diphenylmethane diisocyanate having an NCO group content of 18% to 30% by weight and which comprises the reaction product of:
(a) diphenylmethane diisocyanate having an NCO group content of 31% to 33.5% by weight and comprising (i) from 0% to 23% by weight of the 2,4'-isomer, (ii) from 0% to 3% by weight of the 2,2'-isomer and (iii) from 74% to 100% by weight of the 4,4'-isomer, with the sum of the %'s by weight of (a)(i), (a)(ii) and (a)(iii) totaling 100% by weight of said diphenylmethane diisocyanate,
and
(b) an aliphatic alcohol or an aromatic alcohol, wherein the alcohol contains up to 22 carbon atoms;
with
(B) a polyether polyol containing from 1 to 6 hydroxyl groups and having a molecular weight of from 1,000 to 12,000, in which the polyether polyol is prepared from a suitable starter compound with ethylene oxide and propylene oxide in a weight ratio of 0:100 to 35:65;
and
(II) from 5 to 40% by weight, based on 100% by weight of (I) and (II), of 2,2,4-trimethyl-1,3-pentanediol diisobutyrate
whereby the term freeze-stable means that the polyisocyanate composition herein does not become cloudy and/or precipitate solids at temperatures up to 10°C below the freezing temperature of the neat (unblended) isocyanate, for a period of at least 28 days and whereby the NCO group content of the composition is 6 to 28.5% by weight when using the allophanate modified diphenylmethane diisocyanate and 6 to 26.5% by weight when using the prepolymer of an allophanate modified diphenylmethane diisocyanate.

2. The freeze-stable aromatic diisocyanate of Claim 1, which comprises:
(I) from 70 to 90% by weight of an allophanate modified diphenylmethane diisocyanate having an NCO group content of 23% to 30% by weight, and which comprises the reaction product of:
(a) diphenylmethane diisocyanate having an NCO group content of 31% to 33.5% by weight and comprising (i) from 0% to 10% by weight of the 2,4'-isomer, (ii) from 0% to 3% by weight of the 2,2'-isomer and (iii) from 87% to 100% by weight of the 4,4'-isomer, with the sum of the %'s by weight of (a)(i), (a)(ii) and (a)(iii) totaling 100% by weight of said diphenylmethane diisocyanate,
and
(b) an aliphatic alcohol or an aromatic alcohol, wherein the alcohol contains up to 22 carbon atoms;
and
(II) from 10 to 30% by weight of 2,2,4-trimethyl-1,3-pentanediol diisobutyrate.

3. The freeze-stable aromatic diisocyanate of Claim 1, which comprises:
(I) from 70 to 90% by weight based on 100% by weight of (I) and (II), of a prepolymer of an allophanate-modified diphenylmethane diisocyanate;
and
(II) from 10 to 30% by weight, based on 100% by weight of (I) and (II), of 2,2,4-trimethyl-1,3-pentanediol diisobutyrate.

4. The freeze-stable aromatic diisocyanate of Claim 1, in which
(I) said prepolymer of an allophanate-modified diphenylmethane diisocyanate has an NCO group content of from 12% to 25% by weight and comprises the reaction product of:
(A) an allophanate-modified diphenylmethane diisocyanate having an NCO group content of 23% to 30% by weight and which comprises the reaction product of:
(a) diphenylmethane diisocyanate comprising (i) from 0% to 10% by weight of the 2,4'-isomer, (ii) from 0% to 3% by weight of the 2,2'-isomer and (iii) from 87% to 100% by weight of the 4,4'-isomer, with the sum of the %'s by weight of (a)(i), (a)(ii) and (a)(iii) totaling 100% by weight of said diphenylmethane diisocyanate,
and
(b) an aliphatic alcohol or an aromatic alcohol, wherein the alcohol contains up to 22 carbon atoms;
with
(B) a polyether polyol containing from 1.5 to 6 hydroxyl groups and having a molecular weight of from 2,000 to 12,000, in which the polyether polyol is prepared from a suitable starter compound with ethylene oxide and propylene oxide in a weight ratio of 10:90 to 30:70.

5. A process for the preparation of a freeze-stable aromatic diisocyanate composition, which comprises:
(1) blending
(I) from 60% to 95% by weight, based on 100% by weight of (I) and (II), of an aromatic diisocyanate which comprises an allophanate modified diphenylmethane diisocyanate having an NCO group content of 18% to 30% by weight, which comprises the reaction product of:
(a) diphenylmethane diisocyanate comprising (i) from 0% to 23% by weight of the 2,4'-isomer, (ii) from 0% to 3% by weight of the 2,2'-isomer and (iii) from 74% to 100% by weight of the 4,4'-isomer, with the sum of the %'s by weight of (a)(i), (a)(ii) and (a)(iii) totaling 100% by weight of (a) said diphenylmethane diisocyanate,
and
(b) an aliphatic alcohol or an aromatic alcohol, wherein the alcohol contains up to 22 carbon atoms
or a prepolymer of an allophanate-modified diphenylmethane diisocyanate having an NCO group content of from 10% to 28% by weight and which comprises the reaction product of:
(A) an allophanate-modified diphenylmethane diisocyanate having an NCO group content of 18% to 30% by weight and which comprises the reaction product of:
(a) diphenylmethane diisocyanate having an NCO group content of 31% to 33.5% by weight and comprising (i) from 0% to 23% by weight of the 2,4'-isomer, (ii) from 0% to 3% by weight of the 2,2'-isomer and (iii) from 74% to 100% by weight of the 4,4'-isomer, with the sum of the %'s by weight of (a)(i), (a)(ii) and (a)(iii) totaling 100% by weight of said diphenylmethane diisocyanate,
and
(b) an aliphatic alcohol or an aromatic alcohol, wherein the alcohol contains up to 22 carbon atoms;
with
(B) a polyether polyol containing from 1 to 6 hydroxyl groups and having a molecular weight of from 1,000 to 12,000, in which the polyether polyol is prepared from a suitable starter compound with ethylene oxide and propylene oxide in a weight ratio of 0:100 to 35:65;
with
(II) from 5 to 40% by weight, based on 100% by weight of (I) and (II), of 2,2,4-trimethyl-1,3-pentanediol diisobutyrate
whereby the term freeze-stable means that the polyisocyanate composition herein does not become cloudy and/or precipitate solids at temperatures up to 10°C below the freezing temperature of the neat (unblended) isocyanate, for a period of at least 28 days and whereby the NCO group content of the composition is 6 to 28.5% by weight when using the allophanate modified diphenylmethane diisocyanate and 6 to 26.5% by weight when using the prepolymer of an allophanate modified diphenylmethane diisocyanate.

6. The process of Claim 5, which comprises (1) blending:
(I) from 70 to 90% by weight of an allophanate modified diphenylmethane diisocyanate having an NCO group content of 23% to 30% by weight, and which comprises the reaction product of:
(a) diphenylmethane diisocyanate having an NCO group content of 31% to 33.5% by weight and comprising (i) from 0% to 10% by weight of the 2,4'-isomer, (ii) from 0% to 3% by weight of the 2,2'-isomer and (iii) from 87% to 100% by weight of the 4,4'-isomer, with the sum of the %'s by weight of (a)(i), (a)(ii) and (a)(iii) totaling 100% by weight of said diphenylmethane diisocyanate,
and
(b) an aliphatic alcohol or an aromatic alcohol, wherein the alcohol contains up to 22 carbon atoms;
with
(II) from 10 to 30% by weight of 2,2,4-trimethyl-1,3-pentanediol diisobutyrate.

7. The process of Claim 5, which comprises (1) blending:
(I) from 70 to 90% by weight based on 100% by weight of (I) and (II), of a prepolymer of an allophanate-modified diphenylmethane diisocyanate;
with
(II) from 10 to 30% by weight, based on 100% by weight of (I) and (II), of 2,2,4-trimethyl-1,3-pentanediol diisobutyrate.

8. The process of Claim 5, in which (I) said prepolymer of an allophanate-modified diphenylmethane diisocyanate has an NCO group content of from 12% to 25% by weight and comprises the reaction product of:
(A) an allophanate-modified diphenylmethane diisocyanate having an NCO group content of 23% to 30% by weight and which comprises the reaction product of:
(a) diphenylmethane diisocyanate comprising (i) from 0% to 10% by weight of the 2,4'-isomer, (ii) from 0% to 3% by weight of the 2,2'-isomer and (iii) from 87% to 100% by weight of the 4,4'-isomer, with the sum of the %'s by weight of (a)(i), (a)(ii) and (a)(iii) totaling 100% by weight of said diphenylmethane diisocyanate,
and
(b) an aliphatic alcohol or an aromatic alcohol, wherein the alcohol contains up to 22 carbon atoms;
with
(B) a polyether polyol containing from 1.5 to 6 hydroxyl groups and having a molecular weight of from 2,000 to 12,000, in which the polyether polyol is prepared from a suitable starter compound with ethylene oxide and propylene oxide in a weight ratio of 10:90 to 30:70.

## Patentansprüche

1. Gefrierstabile Zusammensetzung auf Basis von aromatischem Diisocyanat, die Folgendes umfasst:
(I) 60 bis 95 Gew.-%, bezogen auf 100 Gew.-% (I) und (II), eines aromatischen Diisocyanats, das ein allophanatmodifiziertes Diphenylmethandiisocyanat, das einen NCO-Gruppengehalt von 18 bis 30 Gew.-% aufweist und das Umsetzungsprodukt von:
(a) Diphenylmethandiisocyanat, umfassend (i) 0 bis 23 Gew.-% des 2,4'-Isomers, (ii) 0 bis 3 Gew.-% des 2,2'-Isomers und (iii) 74 bis 100 Gew.-% des 4,4'-Isomers, wobei sich die Summe der Gewichtsprozentanteile von (a)(i), (a)(ii) und (a) (iii) auf 100 Gew.-% des Diphenylmethandiisocyanats beläuft,
und
(b) einem aliphatischen Alkohol oder einem aromatischen Alkohol, wobei der Alkohol bis zu 22 Kohlenstoffatome enthält, umfasst,
oder ein Prepolymer eines allophanatmodifizierten Diphenylmethandiisocyanats, das einen NCO-Gruppengehalt von 10 bis 28 Gew.-% aufweist und das Umsetzungsprodukt von:
(A) einem allophanatmodifizierten Diphenylmethandiisocyanat, das einen NCO-Gruppengehalt von 18 bis 30 Gew.-% aufweist und das Umsetzungsprodukt von:
(a) Diphenylmethandiisocyanat, das einen NCO-Gruppengehalt von 31 bis 33,5 Gew.-% aufweist und (i) 0 bis 23 Gew.-% des 2,4'-Isomers, (ii) 0 bis 3 Gew.-% des 2,2'-Isomers und (iii) 74 bis 100 Gew.-% des 4,4'-Isomers, wobei sich die Summe der Gewichtsprozentanteile von (a)(i), (a)(ii) und (a)(iii) auf 100 Gew.-% des Diphenylmethandiisocyanats beläuft, umfasst,
und
(b) einem aliphatischen Alkohol oder einem aromatischen Alkohol, wobei der Alkohol bis zu 22 Kohlenstoffatome enthält,
umfasst
mit
(B) einem Polyetherpolyol mit 1 bis 6 Hydroxylgruppen und einem Molekulargewicht von 1000 bis 12.000, wobei das Polyetherpolyol aus einer geeigneten Starterverbindung mit Ethylenoxid und Propylenoxid in einem Gewichtsverhältnis von 0:100 bis 35:65 hergestellt wird,
umfasst,
umfasst;
und
(II) 5 bis 40 Gew.-%, bezogen auf 100 Gew.-% (I) und (II), 2,2,4-Trimethyl-1,3-pentandiol-diisobutyrat,
wobei der Begriff gefrierstabil bedeutet, dass die Polyisocyanatzusammensetzung hierin bei Temperaturen bis zu 10°C unter der Gefriertemperatur des unverdünnten (ungemischten) Isocyanats über einen Zeitraum von mindestens 28 Tagen keine Trübung und/oder Feststoffausfällung zeigt und wobei der NCO-Gruppengehalt der Zusammensetzung bei Verwendung des allophanatmodifizierten Diphenylmethandiisocyanats 6 bis 28,5 Gew.-% und bei Verwendung des Prepolymers eines allophanatmodifizierten Diphenylmethandiisocyanats 6 bis 26,5 Gew.-% beträgt.

2. Gefrierstabiles aromatisches Diisocyanat nach Anspruch 1, das Folgendes umfasst:
(I) 70 bis 90 Gew.-% eines allophanatmodifizierten Diphenylmethandiisocyanats, das einen NCO-Gruppengehalt von 23 bis 30 Gew.-% aufweist und das Umsetzungsprodukt von:
(a) Diphenylmethandiisocyanat, das einen NCO-Gruppengehalt von 31 bis 33,5 Gew.-% aufweist und (i) 0 bis 10 Gew.-% des 2,4'-Isomers, (ii) 0 bis 3 Gew.-% des 2,2'-Isomers und (iii) 87 bis 100 Gew.-% des 4,4'-Isomers, wobei sich die Summe der Gewichtsprozentanteile von (a)(i), (a)(ii) und (a)(iii) auf 100 Gew.-% des Diphenylmethandiisocyanats beläuft, umfasst,
und
(b) einem aliphatischen Alkohol oder einem aromatischen Alkohol, wobei der Alkohol bis zu 22 Kohlenstoffatome enthält,
umfasst;
und
(II) 10 bis 30 Gew.-% 2,2,4-Trimethyl-1,3-pentan-dioldiisobutyrat.

3. Gefrierstabiles aromatisches Diisocyanat nach Anspruch 1, das Folgendes umfasst:
(I) 70 bis 90 Gew.-%, bezogen auf 100 Gew.-% (I) und (II), eines Prepolymers eines allophanatmodifizierten Diphenylmethandiisocyanats;
und
(II) 10 bis 30 Gew.-%, bezogen auf 100 Gew.-% (I) und (II), 2,2,4-Trimethyl-1,3-pentandiol-diisobutyrat.

4. Gefrierstabiles aromatisches Diisocyanat nach Anspruch 1, wobei das Prepolymer eines allophanatmodifizierten Diphenylmethandiisocyanats einen NCO-Gruppengehalt von 12 bis 25 Gew.-% aufweist und das Umsetzungsprodukt von:
(A) einem allophanatmodifizierten Diphenylmethandiisocyanat, das einen NCO-Gruppengehalt von 23 bis 30 Gew.-% aufweist und das Umsetzungsprodukt von:
(a) Diphenylmethandiisocyanat, das (i) 0 bis 10 Gew.-% des 2,4'-Isomers, (ii) 0 bis 3 Gew.-% des 2,2'-Isomers und (iii) 87 bis 100 Gew.-% des 4,4'-Isomers, wobei sich die Summe der Gewichtsprozentanteile von (a)(i), (a)(ii) und (a) (iii) auf 100 Gew.-% des Diphenylmethandiisocyanats beläuft, umfasst,
und
(b) einem aliphatischen Alkohol oder einem aromatischen Alkohol, wobei der Alkohol bis zu 22 Kohlenstoffatome enthält,
umfasst;
mit
(B) einem Polyetherpolyol mit 1,5 bis 6 Hydroxylgruppen und einem Molekulargewicht von 2000 bis 12.000, wobei das Polyetherpolyol aus einer geeigneten Starterverbindung mit Ethylenoxid und Propylenoxid in einem Gewichtsverhältnis von 10:90 bis 30:70 hergestellt wird,
umfasst.

5. Verfahren zur Herstellung einer gefrierstabilen Zusammensetzung auf Basis von aromatischem Diisocyanat, das Folgendes umfasst:
(1) Mischen von
(I) 60 bis 95 Gew.-%, bezogen auf 100 Gew.-% (I) und (II), eines aromatischen Diisocyanats, das ein allophanatmodifiziertes Diphenylmethandiisocyanat, das einen NCO-Gruppengehalt von 18 bis 30 Gew.-% aufweist und das Umsetzungsprodukt von:
(a) Diphenylmethandiisocyanat, umfassend (i) 0 bis 23 Gew.-% des 2,4'-Isomers, (ii) 0 bis 3 Gew.-% des 2,2'-Isomers und (iii) 74 bis 100 Gew.-% des 4,4'-Isomers, wobei sich die Summe der Gewichtsprozentanteile von (a)(i), (a)(ii) und (a) (iii) auf 100 Gew.-% des Diphenylmethandiisocyanats beläuft,
und
(b) einem aliphatischen Alkohol oder einem aromatischen Alkohol, wobei der Alkohol bis zu 22 Kohlenstoffatome enthält, umfasst,
oder ein Prepolymer eines allophanatmodifizierten Diphenylmethandiisocyanats, das einen NCO-Gruppengehalt von 10 bis 28 Gew.-% aufweist und das Umsetzungsprodukt von:
(A) einem allophanatmodifizierten Diphenylmethandiisocyanat, das einen NCO-Gruppengehalt von 18 bis 30 Gew.-% aufweist und das Umsetzungsprodukt von:
(a) Diphenylmethandiisocyanat, das einen NCO-Gruppengehalt von 31 bis 33,5 Gew.-% aufweist und (i) 0 bis 23 Gew.-% des 2,4'-Isomers, (ii) 0 bis 3 Gew.-% des 2,2'-Isomers und (iii) 74 bis 100 Gew.-% des 4,4'-Isomers, wobei sich die Summe der Gewichtsprozentanteile von (a)(i), (a)(ii) und (a)(iii) auf 100 Gew.-% des Diphenylmethandiisocyanats beläuft, umfasst, und
(b) einem aliphatischen Alkohol oder einem aromatischen Alkohol, wobei der Alkohol bis zu 22 Kohlenstoffatome enthält,
umfasst
mit
(B) einem Polyetherpolyol mit 1 bis 6 Hydroxylgruppen und einem Molekulargewicht von 1000 bis 12.000, wobei das Polyetherpolyol aus einer geeigneten Starterverbindung mit Ethylenoxid und Propylenoxid in einem Gewichtsverhältnis von 0:100 bis 35:65 hergestellt wird,
umfasst,
umfasst;
mit
(II) 5 bis 40 Gew.-%, bezogen auf 100 Gew.-% (I) und (II), 2,2,4-Trimethyl-1,3-pentandiol-diisobutyrat,
wobei der Begriff gefrierstabil bedeutet, dass die Polyisocyanatzusammensetzung hierin bei Temperaturen bis zu 10°C unter der Gefriertemperatur des unverdünnten (ungemischten) Isocyanats über einen Zeitraum von mindestens 28 Tagen keine Trübung und/oder Feststoffausfällung zeigt und wobei der NCO-Gruppengehalt der Zusammensetzung bei Verwendung des allophanatmodifizierten Diphenylmethandiisocyanats 6 bis 28,5 Gew.-% und bei Verwendung des Prepolymers eines allophanatmodifizierten Diphenylmethandiisocyanats 6 bis 26,5 Gew.-% beträgt.

6. Verfahren nach Anspruch 5, das Folgendes umfasst:
(1) Mischen von:
(I) 70 bis 90 Gew.-% eines allophanatmodifizierten Diphenylmethandiisocyanats, das einen NCO-Gruppengehalt von 23 bis 30 Gew.-% aufweist und das Umsetzungsprodukt von:
(a) Diphenylmethandiisocyanat, das einen NCO-Gruppengehalt von 31 bis 33,5 Gew.-% aufweist und (i) 0 bis 10 Gew.-% des 2,4'-Isomers, (ii) 0 bis 3 Gew.-% des 2,2'-Isomers und (iii) 87 bis 100 Gew.-% des 4,4'-Isomers, wobei sich die Summe der Gewichtsprozentanteile von (a)(i), (a)(ii) und (a) (iii) auf 100 Gew.-% des Diphenylmethandiisocyanats beläuft, umfasst,
und
(b) einem aliphatischen Alkohol oder einem aromatischen Alkohol, wobei der Alkohol bis zu 22 Kohlenstoffatome enthält,
umfasst;
mit
(II) 10 bis 30 Gew.-% 2,2,4-Trimethyl-1,3-pentan-dioldiisobutyrat.

7. Verfahren nach Anspruch 5, das Folgendes umfasst:
(1) Mischen von:
(I) 70 bis 90 Gew.-%, bezogen auf 100 Gew.-% (I) und (II), eines Prepolymers eines allophanatmodifizierten Diphenylmethandiisocyanats;
mit
(II) 10 bis 30 Gew.-%, bezogen auf 100 Gew.-% (I) und (II), 2,2,4-Trimethyl-1,3-pentandiol-diisobutyrat.

8. Verfahren nach Anspruch 5, bei dem (I) das Prepolymer eines allophanatmodifizierten Diphenylmethandiisocyanats einen NCO-Gruppengehalt von 12 bis 25 Gew.-% aufweist und das Umsetzungsprodukt von:
(A) einem allophanatmodifizierten Diphenylmethandiisocyanat, das einen NCO-Gruppengehalt von 23 bis 30 Gew.-% aufweist und das Umsetzungsprodukt von:
(a) Diphenylmethandiisocyanat, das (i) 0 bis 10 Gew.-% des 2,4'-Isomers, (ii) 0 bis 3 Gew.-% des 2,2'-Isomers und (iii) 87 bis 100 Gew.-% des 4,4'-Isomers, wobei sich die Summe der Gewichtsprozentanteile von (a)(i), (a) (ii) und (a) (iii) auf 100 Gew.-% des Diphenylmethandiisocyanats beläuft, umfasst,
und
(b) einem aliphatischen Alkohol oder einem aromatischen Alkohol, wobei der Alkohol bis zu 22 Kohlenstoffatome enthält,
umfasst;
mit
(B) einem Polyetherpolyol mit 1,5 bis 6 Hydroxylgruppen und einem Molekulargewicht von 2000 bis 12.000, wobei das Polyetherpolyol aus einer geeigneten Starterverbindung mit Ethylenoxid und Propylenoxid in einem Gewichtsverhältnis von 10:90 bis 30:70 hergestellt wird,
umfasst.

## Revendications

1. Composition de diisocyanate aromatique stable à la congélation qui comprend :
(I) de 60 % à 95 % en poids, sur la base de 100 % en poids de (I) et (II), d'un diisocyanate aromatique qui comprend un diisocyanate de diphénylméthane modifié par allophanate ayant une teneur en groupes NCO de 18 % à 30 % en poids, qui comprend le produit réactionnel de :
(a) diisocyanate de diphénylméthane comprenant
(i) de 0 % à 23 % en poids de l'isomère 2,4',
(ii) de 0 % à 3 % en poids de l'isomère 2,2' et
(iii)de 74 % à 100 % en poids de l'isomère 4, 4',
la somme des pourcentages en poids de (a)(i), (a) (ii) et (a) (iii) totalisant 100 % en poids dudit diisocyanate de diphénylméthane,
et
(b) un alcool aliphatique ou un alcool aromatique, l'alcool contenant jusqu'à 22 atomes de carbone
ou d'un prépolymère d'un diisocyanate de diphénylméthane modifié par allophanate ayant une teneur en groupes NCO de 10 % à 28 % en poids et qui comprend le produit réactionnel de :
(A) un diisocyanate de diphénylméthane modifié par allophanate ayant une teneur en groupes NCO de 18 % à 30 % en poids et qui comprend le produit réactionnel de :
(a) diisocyanate de diphénylméthane ayant une teneur en groupes NCO de 31 % à 33,5 % en poids et comprenant
(i) de 0 % à 23 % en poids de l'isomère 2, 4',
(ii) de 0 % à 3 % en poids de l'isomère 2,2' et
(iii)de 74 % à 100 % en poids de l'isomère 4, 4',
la somme des pourcentages en poids de (a)(i), (a)(ii) et (a) (iii) totalisant 100 % en poids dudit diisocyanate de diphénylméthane,
et
(b) un alcool aliphatique ou un alcool aromatique, l'alcool contenant jusqu'à 22 atomes de carbone ;
avec
(B) un polyol de polyéther contenant de 1 à 6 groupes hydroxyle et ayant une masse moléculaire de 1 000 à 12 000, le polyol de polyéther étant préparé à partir d'un composé de départ approprié comprenant de l'oxyde d'éthylène et de l'oxyde de propylène en un rapport pondéral de 0:100 à 35:65 ;
et
(II) de 5 à 40 % en poids, sur la base de 100 % en poids de (I) et (II), de diisobutyrate de 2,2,4-triméthyl-1,3-pentanediol
le terme stable à la congélation signifiant que la présente composition de polyisocyanate ne devient pas trouble et/ou ne précipite pas de matières solides à des températures allant jusqu'à 10 °C au-dessous de la température de congélation de l'isocyanate pur (non mélangé), pendant une durée d'au moins 28 jours, et la teneur en groupes NCO de la composition étant de 6 à 28,5 % en poids lors de l'utilisation du diisocyanate de diphénylméthane modifié par allophanate et de 6 à 26,5 % en poids lors de l'utilisation du prépolymère d'un diisocyanate de diphénylméthane modifié par allophanate.

2. Diisocyanate aromatique stable à la congélation selon la revendication 1, qui comprend :
(I) de 70 à 90 % en poids d'un diisocyanate de diphénylméthane modifié par allophanate ayant une teneur en groupes NCO de 23 % à 30 % en poids et qui comprend le produit réactionnel de :
(a) diisocyanate de diphénylméthane ayant une teneur en groupes NCO de 31 % à 33,5 % en poids et comprenant
(i) de 0 % à 10 % en poids de l'isomère 2, 4 ,
(ii) de 0 % à 3 % en poids de l'isomère 2,2' et
(iii)de 87 % à 100 % en poids de l'isomère 4, 4',
la somme des pourcentages en poids de (a)(i), (a) (ii) et (a) (iii) totalisant 100 % en poids dudit diisocyanate de diphénylméthane,
et
(b) un alcool aliphatique ou un alcool aromatique, l'alcool contenant jusqu'à 22 atomes de carbone ;
et
(II) de 10 à 30 % en poids de diisobutyrate de 2,2,4-triméthyl-1,3-pentanediol.

3. Diisocyanate aromatique stable à la congélation selon la revendication 1, qui comprend :
(I) de 70 à 90 % en poids, sur la base de 100 % en poids de (I) et (II), d'un prépolymère d'un diisocyanate de diphénylméthane modifié par allophanate ;
et
(II) de 10 à 30 % en poids, sur la base de 100 % en poids de (I) et (II), de diisobutyrate de 2,2,4-triméthyl-1,3-pentanediol.

4. Diisocyanate aromatique stable à la congélation selon la revendication 1, dans lequel
(I) ledit prépolymère d'un diisocyanate de diphénylméthane modifié par allophanate a une teneur en groupes NCO de 12 % à 25 % en poids et comprend le produit réactionnel de :
(A) un diisocyanate de diphénylméthane modifié par allophanate ayant une teneur en groupes NCO de 23 % à 30 % en poids et qui comprend le produit réactionnel de :
(a) diisocyanate de diphénylméthane comprenant
(i) de 0 % à 10 % en poids de l'isomère 2, 4',
(ii) de 0 % à 3 % en poids de l'isomère 2,2' et
(iii)de 87 % à 100 % en poids de l'isomère 4, 4',
la somme des pourcentages en poids de (a)(i), (a)(ii) et (a) (iii) totalisant 100 % en poids dudit diisocyanate de diphénylméthane,
et
(b) un alcool aliphatique ou un alcool aromatique, l'alcool contenant jusqu'à 22 atomes de carbone ;
avec
(B) un polyol de polyéther contenant de 1,5 à 6 groupes hydroxyle et ayant une masse moléculaire de 2 000 à 12 000, le polyol de polyéther étant préparé à partir d'un composé de départ approprié comprenant de l'oxyde d'éthylène et de l'oxyde de propylène en un rapport pondéral de 10:90 à 30:70.

5. Procédé pour la préparation d'une composition de diisocyanate aromatique stable à la congélation, qui comprend : (1) le mélange de
(I) de 60 % à 95 % en poids, sur la base de 100 % en poids de (I) et (II), d'un diisocyanate aromatique qui comprend un diisocyanate de diphénylméthane modifié par allophanate ayant une teneur en groupes NCO de 18 % à 30 % en poids, qui comprend le produit réactionnel de :
(a) diisocyanate de diphénylméthane comprenant
(i) de 0 % à 23 % en poids de l'isomère 2, 4 ,
(ii) de 0 % à 3 % en poids de l'isomère 2,2' et
(iii)de 74 % à 100 % en poids de l'isomère 4, 4',
la somme des pourcentages en poids de (a)(i), (a) (ii) et (a) (iii) totalisant 100 % en poids dudit (a) diisocyanate de diphénylméthane,
et
(b) un alcool aliphatique ou un alcool aromatique, l'alcool contenant jusqu'à 22 atomes de carbone
ou d'un prépolymère d'un diisocyanate de diphénylméthane modifié par allophanate ayant une teneur en groupes NCO de 10 % à 28 % en poids et qui comprend le produit réactionnel de :
(A) un diisocyanate de diphénylméthane modifié par allophanate ayant une teneur en groupes NCO de 18 % à 30 % en poids et qui comprend le produit réactionnel de :
(a) diisocyanate de diphénylméthane ayant une teneur en groupes NCO de 31 % à 33,5 % en poids et comprenant
(i) de 0 % à 23 % en poids de l'isomère 2, 4',
(ii) de 0 % à 3 % en poids de l'isomère 2,2' et
(iii) de 74 % à 100 % en poids de l'isomère 4, 4',
la somme des pourcentages en poids de (a)(i), (a)(ii) et (a) (iii) totalisant 100 % en poids dudit diisocyanate de diphénylméthane,
et
(b) un alcool aliphatique ou un alcool aromatique, l'alcool contenant jusqu'à 22 atomes de carbone ;
avec
(B) un polyol de polyéther contenant de 1 à 6 groupes hydroxyle et ayant une masse moléculaire de 1 000 à 12 000, le polyol de polyéther étant préparé à partir d'un composé de départ approprié comprenant de l'oxyde d'éthylène et de l'oxyde de propylène en un rapport pondéral de 0:100 à 35:65 ;
avec
(II) de 5 à 40 % en poids, sur la base de 100 % en poids de (I) et (II), de diisobutyrate de 2,2,4-triméthyl-1,3-pentanediol
le terme stable à la congélation signifiant que la présente composition de polyisocyanate ne devient pas trouble et/ou ne précipite pas de matières solides à des températures allant jusqu'à 10 °C au-dessous de la température de congélation de l'isocyanate pur (non mélangé), pendant une durée d'au moins 28 jours, et la teneur en groupes NCO de la composition étant de 6 à 28,5 % en poids lors de l'utilisation du diisocyanate de diphénylméthane modifié par allophanate et de 6 à 26,5 % en poids lors de l'utilisation du prépolymère d'un diisocyanate de diphénylméthane modifié par allophanate.

6. Procédé selon la revendication 5, qui comprend (1) le mélange de :
(I) de 70 à 90 % en poids d'un diisocyanate de diphénylméthane modifié par allophanate ayant une teneur en groupes NCO de 23 % à 30 % en poids et qui comprend le produit réactionnel de :
(a) diisocyanate de diphénylméthane ayant une teneur en groupes NCO de 31 % à 33,5 % en poids et comprenant
(i) de 0 % à 10 % en poids de l'isomère 2, 4',
(ii) de 0 % à 3 % en poids de l'isomère 2,2' et
(iii)de 87 % à 100 % en poids de l'isomère 4, 4',
la somme des pourcentages en poids de (a)(i), (a) (ii) et (a)(iii) totalisant 100 % en poids dudit diisocyanate de diphénylméthane,
et
(b) un alcool aliphatique ou un alcool aromatique, l'alcool contenant jusqu'à 22 atomes de carbone ;
avec
(II) de 10 à 30 % en poids de diisobutyrate de 2,2,4-triméthyl-1,3-pentanediol.

7. Procédé selon la revendication 5, qui comprend (1) le mélange de :
(I) de 70 à 90 % en poids, sur la base de 100 % en poids de (I) et (II), d'un prépolymère d'un diisocyanate de diphénylméthane modifié par allophanate ;
avec
(II) de 10 à 30 % en poids, sur la base de 100 % en poids de (I) et (II), de diisobutyrate de 2,2,4-triméthyl-1,3-pentanediol.

8. Procédé selon la revendication 5, dans lequel (I) ledit prépolymère d'un diisocyanate de diphénylméthane modifié par allophanate a une teneur en groupes NCO de 12 % à 25 % en poids et comprend le produit réactionnel de :
(A) un diisocyanate de diphénylméthane modifié par allophanate ayant une teneur en groupes NCO de 23 % à 30 % en poids et qui comprend le produit réactionnel de :
(a) diisocyanate de diphénylméthane comprenant
(i) de 0 % à 10 % en poids de l'isomère 2, 4',
(ii) de 0 % à 3 % en poids de l'isomère 2,2' et
(iii)de 87 % à 100 % en poids de l'isomère 4, 4',
la somme des pourcentages en poids de (a) (i), (a) (ii) et (a) (iii) totalisant 100 % en poids dudit diisocyanate de diphénylméthane,
et
(b) un alcool aliphatique ou un alcool aromatique, l'alcool contenant jusqu'à 22 atomes de carbone ;
avec
(B) un polyol de polyéther contenant de 1,5 à 6 groupes hydroxyle et ayant une masse moléculaire de 2 000 à 12 000, le polyol de polyéther étant préparé à partir d'un composé de départ approprié comprenant de l'oxyde d'éthylène et de l'oxyde de propylène en un rapport pondéral de 10:90 à 30:70.
